# EUROPEAN PATENT APPLICATION

(11) **EP 4 693 113 A2**
(43) Date of publication of application: **11.02.2026**
(21) Application number: 25224669.9
(22) Date of filing: 17.12.2025
(51) Int. Cl.: G06N 5/022, G06N 3/042, G06N 3/08, G06N 3/0475, G06N 3/045

(54) **METHOD AND SYSTEM FOR ERROR DIAGNOSIS AND PREDICTIVE MAINTENANCE IN SEMICONDUCTOR MANUFACTURING USING A MULTIMODAL REASONING ENGINE**

(71) Applicant: ASML Netherlands B.V., 5500 AH Veldhoven (NL)
(72) Inventor: SOLEIMANZADEH, Maryam, 5500 AH Veldhoven (NL); SHAKERI, Sayyed, Mojtaba, 5500 AH Veldhoven (NL); HUBAUX, Arnaud, 5500 AH Veldhoven (NL)
(74) Representative: ASML Netherlands B.V.

(57) **Abstract**

Described is a method and system for error diagnosis in a semiconductor manufacturing environment using multimodal data reasoning engine. Data representing a process, tool, or wafer condition, such as images, numerical measurement maps, or sensor signals, are encoded into numerical vector representations characterizing spatial and statistical features of a condition (e.g., error). A vector database storing vectors linked to metadata describing prior conditions is searched to identify similar representations. Metadata associated with the retrieved vectors is provided to a reasoning engine that accesses a knowledge graph defining causal relations among process modules, tool parameters, materials, and failure classes. The reasoning engine traverses multiple relations within the knowledge graph to determine a multi-hop causal path connecting the observed condition to probable root causes or corrective actions via intermediate. Continuous ingestion of process data and autonomous knowledge-graph updating enable adaptive diagnostics and predictive-maintenance capability across semiconductor manufacturing processes.

## Description

### TECHNICAL FIELD

The description herein relates to lithographic apparatuses and processes, and more particularly to fault, failure or error diagnosis and isolation in semiconductor manufacturing using a multi-modal reasoning engine.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") of a patterning device (e.g., a mask) onto a layer of radiation-sensitive material (resist) provided on a substrate (e.g., a wafer). This manufacturing process may be referred to as a patterning process or a lithographic process. For example, an IC chip in a smart phone, can be as small as a person's thumbnail, and may include over 2 billion transistors. Making an IC is a complex and time-consuming process, with circuit components in different layers and including hundreds of individual steps executed by numerous process tools such as lithography scanners, metrology systems, inspection modules, deposition chambers, and chemical-mechanical planarization (CMP)
tools. Errors in even one step have the potential to result in problems with the final IC and can cause device failure. Each process step introduces subtle variations in pattern fidelity, alignment, or material characteristics. These variations are monitored using a large volume of metrology data, wafer maps, sensor traces, and process logs. Identifying the underlying cause of performance errors or process drifts from such heterogeneous data is challenging, particularly when faults arise from multi-step interactions among process tools, materials, and environmental factors. High process yield and high wafer throughput can be impacted by the presence of defects, especially if operator intervention is required for reviewing the defects.

Conventional error classification and diagnostic frameworks in semiconductor manufacturing rely on either rule-based expert systems or static machine-learning models trained on structured datasets. Such systems typically cannot directly process or classify errors from raw data patterns, image-based maps, or unstructured sensor signals, and therefore depend on manual feature engineering or intermediate data conversion. Some recent approaches integrate knowledge graphs (KGs) to represent relationships between process parameters and failure mechanisms; however, these knowledge graphs are manually curated and remain static once deployed. As a result, existing artificial intelligence (AI) retrieval and KG-based reasoning solutions face several notable limitations, including limited ability to process and classify errors directly from raw data patterns or graph/images, relying mainly on structured text input; inadequate multi-hop, domain-specific reasoning needed for complex fault diagnosis or overlay error root-cause identification; and insufficient explainability, as current systems lack visualization of subgraphs of causal proof chains that show how an inferred cause is derived from evidence; and manual and non-adaptive knowledge graph maintenance, preventing autonomous learning or continuous incorporation of new fab data.

Due to these limitations, current diagnostic frameworks cannot consistently trace wafer-level anomalies to their chained upstream causes without significant manual correlation. They also cannot evolve as new error patterns or failure classes appear. Consequently, root-cause analysis remains slow, largely dependent on human expertise, and not well-suited for automated fab-wide predictive maintenance or closed-loop process control. These and other drawbacks exist.

### SUMMARY

In some embodiments, the method may include receiving data associated with a condition of a semiconductor manufacturing process, a process tool or a wafer processed by the process tool using the process, the data including at least one of an image or a set of raw measurement signals. The method may also include encoding the data into a numerical vector representation. The method may furthermore include searching a vector database having vector representations respectively linked to metadata describing prior conditions to identify one or more stored vector representations similar to the numerical vector representation. The method may in addition include providing the metadata linked to the identified stored vector representations to a reasoning engine that accesses a knowledge graph defining causal relations among process entities. The method may moreover include generating, based on traversal of multiple relations in the knowledge graph using the metadata, a result having a causal path identifying a probable cause of the condition. Other embodiments of this aspect include corresponding computer systems, apparatus, and computer programs recorded on one or more computer storage devices, each configured to perform the actions of the methods.

In some embodiments, the method may include receiving data representing an error condition associated with a semiconductor manufacturing process, a process tool, or a wafer processed by the process tool using the process, the data including at least one of an image, a numerical measurement map, or a sensor signal. The method may also include encoding the data into a numerical vector representation characterizing spatial or statistical features of the error condition. The method may furthermore include searching a vector database storing vector representations respectively linked to metadata describing previously identified error conditions to identify vector representations similar to the numerical vector representation. The method may in addition include providing metadata linked to the identified stored vector representations to a reasoning engine that accesses a knowledge graph defining causal relations among process modules, tool parameters, materials, and failure classes. The method may moreover include determining, based on traversal of a plurality of causally connected nodes in the knowledge graph, a multi-hop causal path extending from a node representing the error condition through one or more intermediate causal factors to at least one node representing a root cause or corrective action.

In some embodiments, the techniques described herein relate to an apparatus, the apparatus including: a memory storing a set of instructions; and a processor configured to execute the set of instructions to cause the apparatus to perform a method of any of the above embodiments.

In some embodiments, the techniques described herein relate to a non-transitory computer-readable medium having instructions recorded thereon, the instructions when executed by a computer implementing the method of any of the above embodiments.

### BRIEF DESCRIPTION OF THE DRAWINGS

Figure 1 depicts a schematic overview of a lithographic apparatus, consistent with various embodiments.
Figure 2 depicts a schematic overview of a lithographic cell, consistent with various embodiments.
Figure 3 depicts a schematic representation of holistic lithography, representing a cooperation between three technologies to optimize semiconductor manufacturing, consistent with various embodiments.
Figure 4 is a block diagram of a system for error diagnosis using a multi-modal reasoning engine, consistent with various embodiments.
Figure 5A illustrates data representative of various conditions associated with a semiconductor manufacturing process, consistent with various embodiments.
Figure 5B illustrates an example segment of a knowledge graph that represents causal dependencies among process and tool parameters for a lithography focus error, consistent with various embodiments.
Figure 6 is a flow diagram of a method for error diagnosis using a multi-modal reasoning engine, consistent with various embodiments.
Figure 7 is a block diagram that illustrates a computer system which can assist in implementing the systems and methods disclosed herein.

### DETAILED DESCRIPTION

Disclosed are embodiments for error diagnosis in semiconductor manufacturing using a multimodal reasoning engine. In some embodiments, data describing conditions associated with a semiconductor manufacturing process, a process tool, or a wafer processed by the process tool are received. The data may include wafer images, overlay maps, sensor traces, or process logs that collectively reflect the operational state or performance of the process. These heterogeneous inputs are transformed into numerical representations within a shared encoding space, allowing image-based and numerical data to be compared and retrieved in a consistent manner. A vector database stores vectors associated with the conditions together with metadata, which includes contextual information describing corresponding process parameters, tool identifiers, and error classifications associated with the data. The vector database stores historical data of the past conditions.

Upon receiving new input data representative of a condition, the system searches the vector database to identify similar or matching stored vectors and retrieves their metadata. The metadata is supplied to a reasoning engine (e.g., a prediction model, such as a machine learning (ML) model) configured to access a knowledge graph (KG) defining causal relations among process entities such as process modules, tool parameters, materials, measurement targets, and failure classes. The reasoning engine traverses multiple connected relations in the KG to determine a multi-hop causal path linking an observed condition (e.g., an error) to one or more probable causes or corrective actions. In some embodiments, the reasoning engine evaluates the causal path for logical consistency and completeness and generates an explainable visual subgraph illustrating intermediate causal factors and supporting evidence. The resulting diagnostic output may identify the probable cause and a recommended corrective action and can be used to control or adjust operating parameters of a process tool.

The knowledge graph is autonomously maintained by a knowledge builder engine (e.g., a ML model) that updates the graph in response to trigger conditions such as receipt of new data from process tools, or confirmation or correction of prior reasoning results. The knowledge builder engine may automatically extract causal relations from process documentation, logs, or sensor data, and insert or modify corresponding nodes or edges in the KG. The reasoning engine and the knowledge builder engine may operate concurrently and may be implemented as separate instances of a common language-based model configured to perform different respective functions, thereby allowing continuous, real-time reasoning based on newly added entities or relations.

Compared with existing diagnostic systems that rely on static rule sets, manual data labeling, or single-modality analysis, the disclosed embodiments provide significant advantages. By integrating multimodal encoding with vector-based retrieval and multi-hop causal reasoning, the system can process raw image and signal data directly, correlate them with historical patterns, and explain the derived diagnosis through visual subgraphs. The self-evolving knowledge graph enables continuous learning from new fab data and operator feedback, reducing the need for manual knowledge curation. As a result, the disclosed embodiments support faster and more accurate root-cause analysis, and explainable reasoning for complex fault chains. Over time, the evolving knowledge graph allows the same architecture to shift from reactive fault diagnosis to predictive maintenance, supporting more stable and efficient semiconductor manufacturing operations.

In the present disclosure, although specific reference may be made to the manufacture of ICs, it should be explicitly understood that the description herein has many other possible applications. For example, it may be employed in the manufacture of integrated optical systems, guidance and detection patterns for magnetic domain memories, liquid crystal display panels, thin film magnetic heads, etc. The skilled artisan will appreciate that, in the context of such alternative applications, any use of the terms "reticle", "wafer" or "die" in this text should be considered as interchangeable with the more general terms "mask", "substrate" and "target portion", respectively.

In the present document, the terms "radiation" and "beam" are used to encompass all types of electromagnetic radiation, including ultraviolet radiation (e.g., with a wavelength of 565, 248, 293, 257 or 226 nm) and EUV (extreme ultra-violet radiation, e.g., having a wavelength in the range of about 5-100 nm). In the present document, the term "radiation source" or "source" is used to encompass all types of sources of radiation, including laser sources, incandescent sources, etc. which may include treatment of the radiation between the radiation source and the target or other parts of the optics, including filtering, collimating, focusing, etc.

A patterning device can comprise, or can form, one or more design layouts. The design layout can be generated utilizing CAD (computer-aided design) programs. This process is often referred to as EDA (electronic design automation). Most CAD programs follow a set of predetermined design rules in order to create functional design layouts/patterning devices. These rules are set based processing and design limitations. For example, design rules define the space tolerance between devices (such as gates, capacitors, etc.) or interconnect lines, to ensure that the devices or lines do not interact with one another in an undesirable way. One or more of the design rule limitations may be referred to as a "critical dimension" (CD). A critical dimension of a device can be defined as the smallest width of a line or hole, or the smallest space between two lines or two holes. Thus, the CD regulates the overall size and density of the designed device. One of the goals in device fabrication is to faithfully reproduce the original design intent on the substrate (via the patterning device).

The term "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective; binary, phase-shifting, hybrid, etc.), examples of other such patterning devices include a programmable mirror array. An example of such a device is a matrix-addressable surface having a viscoelastic control layer and a reflective surface. The basic principle behind such an apparatus is that (for example) addressed areas of the reflective surface reflect incident radiation as diffracted radiation, whereas unaddressed areas reflect incident radiation as undiffracted radiation. Using an appropriate filter, the said undiffracted radiation can be filtered out of the reflected beam, leaving only the diffracted radiation behind; in this manner, the beam becomes patterned according to the addressing pattern of the matrix-addressable surface. The required matrix addressing can be performed using suitable electronic means. Examples of other such patterning devices also include a programmable LCD array. An example of such a construction is given in U.S. Patent No. 5,229,872, which is incorporated herein by reference.

The term "projection optics" as used herein should be broadly interpreted as encompassing various types of optical systems, including refractive optics, reflective optics, apertures and catadioptric optics, for example. The term "projection optics" may also include components operating according to any of these design types for directing, shaping, or controlling the projection beam of radiation, collectively or singularly. The term "projection optics" may include any optical component in the lithographic projection apparatus, no matter where the optical component is located on an optical path of the lithographic projection apparatus. Projection optics may include optical components for shaping, adjusting and/or projecting radiation from the source before the radiation passes the patterning device, and/or optical components for shaping, adjusting and/or projecting the radiation after the radiation passes the patterning device. The projection optics generally exclude the source and the patterning device.

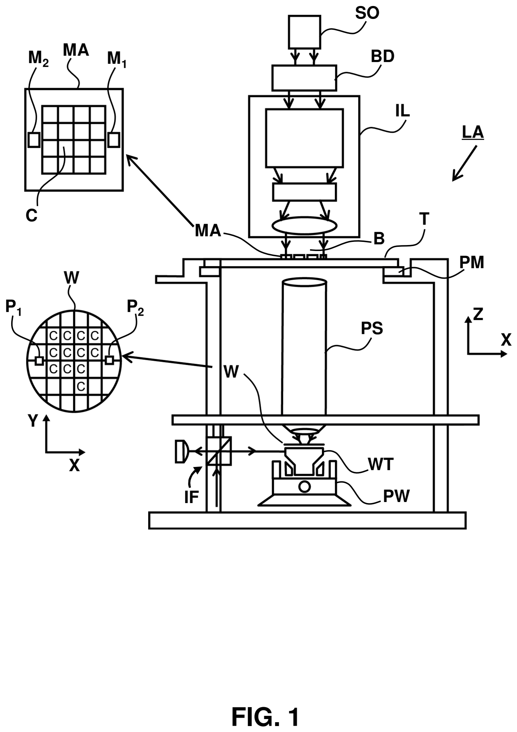

Figure 1 schematically depicts a lithographic apparatus LA, consistent with various embodiments. The lithographic apparatus LA includes an illumination system (also referred to as illuminator) IL configured to condition a radiation beam B (e.g., UV radiation, DUV radiation or EUV radiation), a mask support (e.g., a mask table) T constructed to support a patterning device (e.g., a mask) MA and connected to a first positioner PM configured to accurately position the patterning device MA in accordance with certain parameters, a substrate support (e.g., a wafer table) WT configured to hold a substrate (e.g., a resist coated wafer) W and coupled to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks P1, P2. Although the substrate alignment marks P1, P2 as illustrated occupy dedicated target portions, they may be located in spaces between target portions. Substrate alignment marks P1, P2 are known as scribe-lane alignment marks when these are located between the target portions C.

In some embodiments, a Cartesian coordinate system is used. The Cartesian coordinate system has three axis, i.e., an x-axis, a y-axis and a z-axis. Each of the three axis is orthogonal to the other two axis. A rotation around the x-axis is referred to as an Rx-rotation. A rotation around the y-axis is referred to as an Ry-rotation. A rotation around about the z-axis is referred to as an Rz-rotation. The x-axis and the y-axis define a horizontal plane, whereas the z-axis is in a vertical direction. The Cartesian coordinate system is not limiting the invention and is used for clarification only. Instead, another coordinate system, such as a cylindrical coordinate system, may be used to clarify the invention. The orientation of the Cartesian coordinate system may be different, for example, such that the z-axis has a component along the horizontal plane.

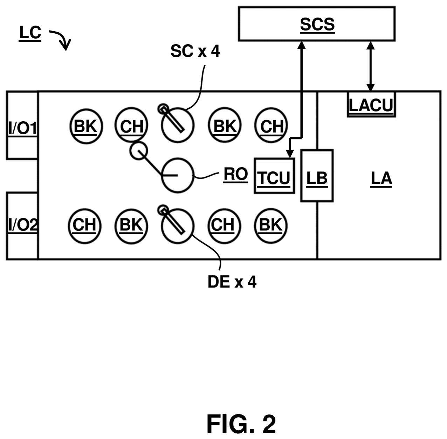

Figure 2 depicts a schematic overview of a lithographic cell LC, consistent with various embodiments. As illustrated, the lithographic apparatus LA may form part of lithographic cell LC, also sometimes referred to as a lithocell or (litho)cluster, which often also includes apparatus to perform pre- and post-exposure processes on a substrate W. Conventionally, these include spin coaters SC configured to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g., via lithography control unit LACU.

In order for the substrates W (Figure 1) exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (such as a metrology tool - not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

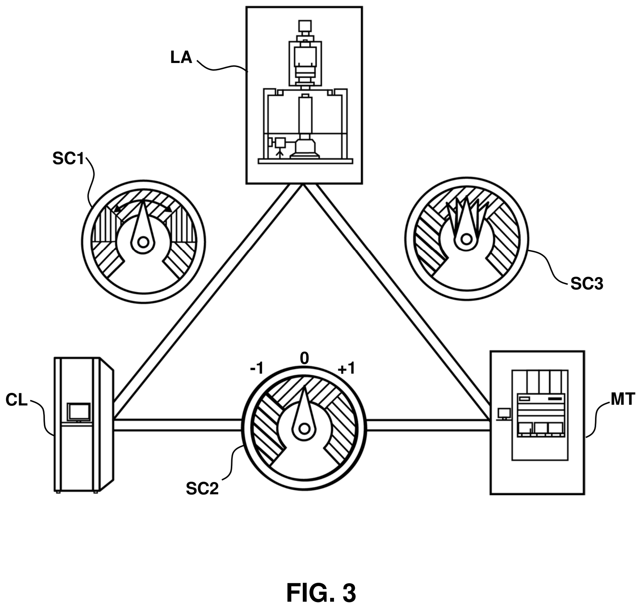

Figure 3 depicts a schematic representation of holistic lithography, representing a cooperation between three technologies to optimize semiconductor manufacturing, consistent with various embodiments. Typically, the patterning process in a lithographic apparatus LA is one of the most critical steps in the processing which requires high accuracy of dimensioning and placement of structures on the substrate W (Figure 1). To ensure this high accuracy, three systems (in this example) may be combined in a so called "holistic" control environment as schematically depicted. One of these systems is the lithographic apparatus LA which is (virtually) connected to a metrology apparatus (e.g., a metrology tool) MT (a second system), and to a computer system CL (a third system). A "holistic" environment may be configured to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

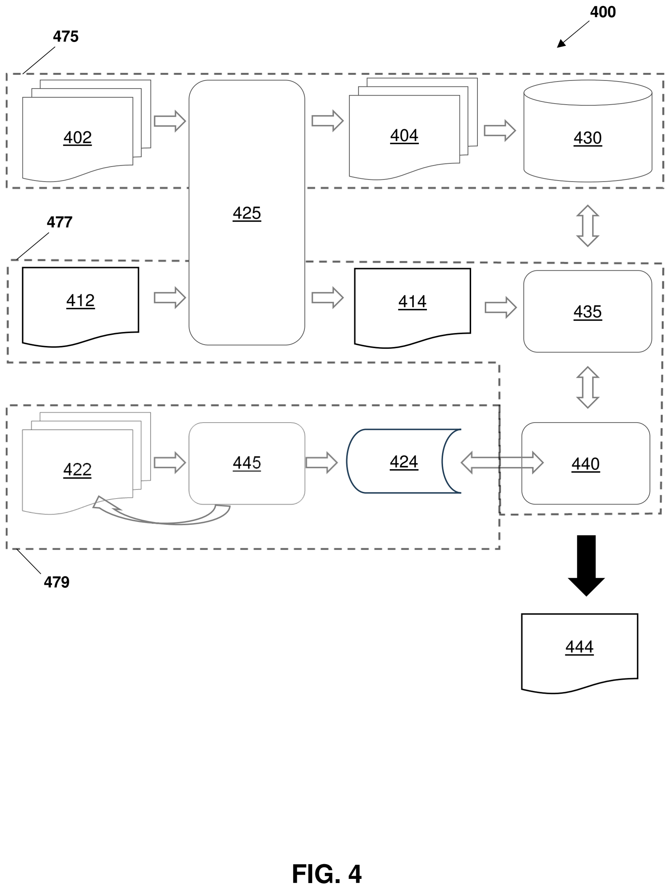

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Figure 4 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Figure 4 by the arrow pointing "0" in the second scale SC2).

The metrology apparatus (tool) MT may provide input to the computer system CL to enable accurate simulations and predictions, and may provide feedback to the lithographic apparatus LA to identify possible drifts, e.g. in a calibration status of the lithographic apparatus LA (depicted in Figure 4 by the multiple arrows in the third scale SC3).

In lithographic processes, it is desirable to make frequent measurements of the structures created, e.g., for process control and verification. Tools to make such measurements include metrology tool (apparatus) MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure features of a substrate such as gratings using light from soft x-ray and visible to near-IR wavelength range, for example.

The following paragraphs describe systems and methods for error diagnosis and predictive maintenance in semiconductor manufacturing using a multimodal reasoning engine. The disclosed architecture integrates vector-based retrieval of multimodal process data with causal reasoning over an evolving knowledge graph of process relations. The system can analyze raw image or signal data from process tools, determine probable causes of process or equipment deviations, and support predictive maintenance through continuous knowledge-graph updating.

Figure 4 is a block diagram of a system 400 for error diagnosis using a multi-modal reasoning engine, consistent with various embodiments. As illustrated in Figure 4, the system 400 may be organized into three principal operational phases: an indexing phase 475, a retrieval phase 477, and a knowledge-graph phase 479. Each phase may be implemented on one or more computing systems executing the modules described below.

In the indexing phase 475, condition data 402 including information regarding a condition associated with a semiconductor manufacturing process, a process tool, or a wafer processed by the process tool are collected from various semiconductor manufacturing tools or from a user. As used herein, the term "condition" refers to a measurable or inferred state associated with a semiconductor manufacturing process, a process tool, or a wafer processed by the process tool. A condition may represent a parameter, characteristic, performance deviation, an error classification, or an operational state indicative of tool performance, process stability, or wafer quality derived from image-based data, numerical measurement maps, sensor traces, process logs, or raw numerical signals. Examples of conditions include overlay deviation, focus non-uniformity, film-thickness variation, temperature or vibration drift, CD variation, tool-chamber pressure fluctuations, illumination instability, and other physical or operational indicators of process or equipment performance. A condition may represent either a nominal state within tolerance or an abnormal state such as an error, drift, or a fault/error condition that deviates from a reference specification. Unless stated otherwise, references herein to "condition" or "condition data" encompass data indicative of any such state.

The disclosed embodiments may be applied to a wide range of semiconductor manufacturing process tools and processes. In general, a process tool refers to any equipment configured to perform, monitor, or inspect a fabrication operation on a semiconductor wafer, and a process refers to the physical or chemical transformation executed by such equipment. Examples of process tools include a lithography tool, a metrology tool, an inspection tool, a deposition tool, a chemical-mechanical planarization tool, an etch tool, or a mask writing tool. The process associated with semiconductor manufacturing includes any process executed by these tools. The foregoing examples illustrate representative, non-limiting categories of process tools and processes that can generate or supply the condition data 402.

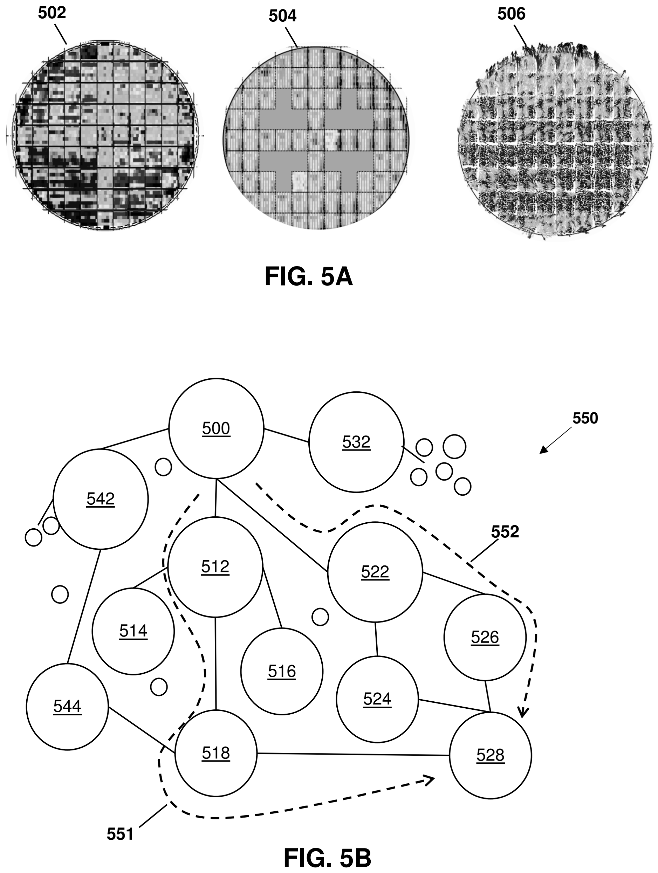

The condition data 402 may include any of images (e.g., optical inspection or scanning-electron-microscope images of wafer regions), numerical measurement maps (e.g., wafer maps such as overlay map 506 of Figure 5A, focus map 502, or CD map 504 where each grid location contains a measured value), sensor traces or raw numerical signals (e.g., time-series readings of chamber pressure, temperature, vibration, or reflectometry spectra), process logs or textual records (e.g., event logs, recipe parameters, or operator annotations generated by the process tool), or any other metrology data (e.g., metrology optical image). Each of these data types characterizes a different aspect of process or equipment behavior, and all are collectively referred to herein as the condition data 402 unless a specific data type is identified.

The encoding model 425 receives the condition data 402 and converts each dataset into a vector representation 404 in a common multidimensional encoding space. The vector representation 404 captures both spatial and contextual features of the pattern in the condition data 402 (e.g., error pattern). In this common multidimensional encoding space, similar input conditions are located near, closer or proximate to each other, and dissimilar input conditions are farther apart. For example, two overlay error maps with the same spatial distortion pattern will produce encodings close together, whereas two unrelated error types (e.g., focus vs. contamination) will be far apart. The encoding model 425 converts the condition data into a mathematical "fingerprint" that captures its pattern and meaning.

The generated vector representations 404 are stored in a vector database 430 together with associated metadata describing the process context, such as tool identifier, recipe step, lot number, confirmed error classification, or correction action taken. The metadata provides semantic context for causal reasoning and enables the knowledge graph to relate numerical similarity of patterns to physical and operational relationships within the semiconductor manufacturing environment. In some embodiments, the metadata may be provided with the condition data 402. An examples metadata record can read as follows: ("vector_id":"OVR_2025_1345", "tool_id": "XT:2100i", "process_step": "LITHO_07", "layer_name": "M3", "measurement_type": "Overlay_XY", "metrology_target": "Mark_TypeB", "wafer_id": "WAF12345", "lot_id": "LOT89A","overlay_X_nm": 4.2, "overlay_Y_nm": -2.1, "error_type": "Overlay_X_drift", "error_severity": "Moderate", "identified_cause": "Lens heating imbalance", "corrective_action": "Cooling circuit recalibration", "confirmation_status": "Verified", "source": "Metrology_Tool_OVL702").

The encoding model 425 may be implemented as a neural encoder trained on multimodal fabrication data to extract latent spatial and statistical features representative of process behavior. Example encoder architectures include convolutional neural networks (CNNs), Vision Transformers (ViTs), autoencoders, or contrastive multimodal models such as CLIP or SimCLR. The vector database 430 may be realized using known high-dimensional indexing frameworks such as FAISS, Milvus, Pinecone, or Annoy, employing similarity metrics such as cosine similarity or approximate nearest-neighbor (ANN) search. Collectively, these data form an indexed repository of historical process and equipment conditions that can be searched based on vector similarity. In multimodal implementations, a contrastive training objective aligns all embeddings within a common encoding space.

The vector database 430 may be used to search for similar conditions (e.g., errors) for any new condition (e.g., error) that is received at the system. During the retrieval phase 477, input condition data 412 is received from a user or one or more active process tools for analysis. Example input condition data 412 include: a wafer-level focus map (numerical measurement map such as the focus map 502 of Figure 5A) acquired by a metrology system, an optical inspection image (image) of a die, a chamber-temperature time-series (sensor trace), or a tool event log entry (process log). The input condition data 412 is encoded by the encoding model 425 to yield a corresponding vector representation 414.

A retrieval engine 435 searches the vector database 430 by comparing vector representation 414 against vector representations 404 to identify the most similar vector representations (e.g., most similar prior cases with the same condition). The retrieval engine 435 identifies stored vector representations located within a defined proximity of the vector representation 414 in the common encoding space, the defined proximity corresponding to similarity of underlying conditions represented by the respective data from which the vector representations were derived. The retrieval engine 435 determines similarity between the input vector representation 414 and stored vector representations 404 using distance metrics such as Euclidean or cosine distance and selects the top-K most similar results or those within a similarity threshold. In some embodiments, the retrieval engine 435 further performs ensemble ranking or hybrid symbolic-numeric aggregation to refine or combine results obtained from multiple retrieval criteria or data modalities. The retrieval engine 435 aggregates the metadata linked to the identified vector representations, forming a contextual dataset that summarizes known process parameters, historical failure modes, or corrective actions associated with similar signatures. In some embodiments, the retrieval engine 435 determines a consensus condition label (e.g., error classification) that can be used as input to the reasoning engine 440 by aggregating metadata from the identified vector representations.

The aggregated metadata are provided to the multimodal reasoning engine 440, which operates in conjunction with the knowledge graph 424. The knowledge graph (KG) 424 represents relationships and causal dependencies among semiconductor manufacturing entities, including process modules, tool subsystems, materials, process parameters, measurement targets, and error classes. Each node in the KG 424 corresponds to an entity, and each edge represents a causal or correlative relation. The KG 424 may be implemented using known technologies such as Neo4j, TigerGraph, NetworkX, RDF triple stores, etc. and can be queried using graph query languages or APIs.

Figure 5B illustrates an example segment 550 of the knowledge graph 424 that represents causal dependencies among process and tool parameters for a lithography focus error, consistent with various embodiments. Each node in the graph denotes a distinct process entity, parameter, or condition, and each edge represents a causal or correlative relation between two nodes. The edges may be directed to indicate causal influence (for example, A → B meaning "A causes or contributes to B") or undirected to indicate mutual correlation.

In the segment 550, a focus-uniformity error 500 node corresponds to a measured condition derived from a wafer-level focus map, representing non-uniform focus across exposure fields. Upstream of this node, multiple possible root-cause chains are modeled. A first causal chain 551 includes optics degradation or misalignment 512, which in turn connects to slit illumination non-uniformity 518, culminating at poor quality of air-control cabinet 528. This chain represents an optical-path degradation mechanism in which a slit-illumination imbalance mechanism, originating from suboptimal air filtration or air-control performance, degrades lens transmission uniformity and causes defocus or field-dependent focus variation on the wafer. The segment 550 also indicates that the optics degradation or misalignment 512 may be caused by alternative intermediate factors, projection lens misalignment 514 or rema lens misalignment 516, capturing a many-to-many causal topology.

A second causal chain 552 includes contamination in optical path 522, which links to dust on rema lens 526 and terminates in poor air-control cabinet quality 528. This path expresses that a contamination site, such as rema lens 526, can degrade optical transmission uniformity causing focus non-uniformity on the wafer. The segment 550 also indicates that the optical transmission degradation can also happen due to contamination at illumination optics 524.

The segment 550 shows yet another causal chain where calibration issues 542 is linked to incorrect compensation for slit uniformity alignment 544, which is linked to slit illumination non-uniformity 518 and terminates in poor quality of air control cabinet 528. In some embodiments, the degraded air/control conditions 528 may lead to non-uniform slit illumination 518, and an incorrect compensation for that nonuniformity produces calibration issues 542 that manifest as a wafer-level focus uniformity error 502. The graph therefore encodes a multi-step causal mechanism in which an environmental root cause produces an observable wafer error via intermediate optical and/or control-system failures.

In general, each node in the KG 424 may be classified into one of several semantic categories, such as: measurement or condition nodes (e.g., focus error 502, overlay drift, CD variation); intermediate parameter nodes (e.g., optics degradation 512, slit illumination non-uniformity 518); physical-cause nodes (e.g., dust on rema lens 526, air-control cabinet 528); or corrective-action nodes (e.g., lens cleaning, airflow recalibration) (not illustrated).

The edges among these nodes encode relations such as "causes," "influences," "correlates with," "can be mitigated by," or "results in." Each relation may have an associated weight or confidence value that reflects statistical correlation, historical frequency, or expert confirmation. The combination of nodes and weighted relations defines a causal network that can be traversed by the multimodal reasoning engine 440 to identify multi-hop causal paths and corresponding corrective actions.

The knowledge builder engine 445 automatically constructs and refines the knowledge graph 424 using a combination of data-driven extraction and knowledge-ingestion techniques. During an initialization or learning phase, the knowledge builder engine 445 ingests process data 422 that may include process documentation, maintenance records, metrology logs, operator annotations describing known faults and their causes, or any other documents such as element performance specification (EPS), system performance specification (SPS), element design specification (EDS), test performance specification (TPS). The knowledge builder engine 445 may employ natural-language processing and ML methods, such as named-entity recognition, relation extraction, and co-occurrence analysis, to identify entities and causal phrases within these sources. Example frameworks that may be used include Open Information Extraction (OpenIE), spaCy, GraphRAG, a combination of large-language-model (LLM) and Neo4J, a combination of LLM and At Scale, etc. or proprietary large-language-model-based extractors.

From these inputs, the knowledge builder engine 445 creates or updates nodes and relations in the KG 424. For example, when a document or log entry states that "focus non-uniformity often results from lens contamination caused by degraded air filtration," the builder engine 445 can extract the entities focus non-uniformity, lens contamination, and air filtration degradation and the causal relations "results from" and "caused by." These are then converted into graph nodes and directed edges corresponding to the relationships shown in Figure 5B. The knowledge builder engine 445 may assign initial weights or confidence levels to new edges based on frequency of occurrence in the source data or validation feedback from users. Over time, as additional wafer conditions are diagnosed by the multimodal reasoning engine 440 and confirmed by users or process outcomes, the knowledge builder engine 445 reinforces or adjusts the weights of relevant relations, thereby refining the fidelity of the KG 424.

The knowledge builder engine 445 can also merge knowledge extracted from multimodal condition data 402 with textual or structured knowledge. For example, repeated observation of focus-map patterns correlated with air-flow sensor anomalies may automatically strengthen the relation between focus non-uniformity and air-control cabinet performance. The continuous updates performed by the knowledge builder engine 445 ensure that the KG 424 remains consistent with current fab behavior and captures both known and newly emerging causal mechanisms.

Accordingly, the segment of the KG 424 depicted in Figure 5B represents one localized causal subgraph associated with a lithography focus-error domain. The topology encodes multiple, interrelated physical mechanisms, such as optical degradation, illumination imbalance, and contamination origin, and shows that distinct causal chains can converge on a shared root cause. This structure allows the multimodal reasoning engine 440 to interpret measurement anomalies in context, evaluate alternative explanations, and recommend targeted maintenance actions such as rema-lens cleaning or air-filtration inspection. The same architecture can be extended to other process domains (for example, etch-profile deviation or CMP non-uniformity), in which analogous subgraphs are built by the knowledge builder engine 445 to represent the causal landscape for those processes.

Referring back to Figure 4, LLM technology may be employed to implement or augment the multimodal reasoning engine 440. Generally, an LLM is a transformer-based deep-learning model trained on large corpora of natural-language text and technical data. When fine-tuned or prompted with domain-specific information, such a model can perform reasoning, relation extraction, and question-answering over textual and symbolic representations. In this system, an LLM instance may interpret the retrieved metadata (e.g., provided by the retrieval engine 435), formulate graph-traversal queries, evaluate logical consistency, and generate human-readable explanations. Example LLM architectures include GPT, Mistral, LLaMA, or comparable proprietary or open-source models.

Using the retrieved metadata and graph context, the reasoning engine 440 formulates a structured query, queries the KG 424 to retrieve or infer causal relations that explain the input condition. In some embodiments, the multimodal reasoning engine 440 formulates context-aware queries to the KG 424 using both the metadata provided by the retrieval engine 435 and the structural and semantic context of the KG 424 itself. The reasoning engine 440 references the graph's schema, node categories, and relation types to identify relevant domains and traversal depths. Based on this context, it composes structured queries that target subgraphs most pertinent to the observed condition. For example, when metadata indicates an optical focus anomaly, the reasoning engine 440 restricts its traversal to nodes and relations within an optical-domain subgraph connecting environment and illumination nodes to condition nodes such as focus-uniformity error 500. If no satisfactory path is found, the reasoning engine 440 automatically broadens the query context to adjacent domains or relation types to recover incomplete causal chains. In some embodiments, the vector database 430 and the KG 424 are stored in a common data management system such that the metadata linked to the identified stored vector representations is accessible to the reasoning engine 440 without intermediate conversion.

With reference to the example of Figure 5B, the reasoning engine 440 identifies two possible causal paths: the first causal path 551 - focus-uniformity error 500 , optics degradation or misalignment 512, slit illumination non-uniformity 518, and poor quality of air control cabinet 528; and second causal path 552: focus-uniformity error 502, contamination in optical path 522, dust on Rema lens 526, and poor quality of air control cabinet 528. The reasoning engine 440 may evaluate which path best explains the current data using statistical correlation, prior-case similarity, or direct sensor evidence. For example, if metadata from the vector database 430 indicate frequent co-occurrence of contamination events with similar focus-map patterns, the first causal path 551 may receive a higher confidence score. Conversely, if slit-illumination telemetry reveals recent instability, the reasoning engine 440 may prefer the second causal path 552. In some embodiments, both paths and their relative confidence values are output as an explainable subgraph within output 444, providing the user with transparent reasoning chains.

The reasoning engine 440 may also evaluate completeness and logical consistency of each causal chain-ensuring that intermediate nodes (e.g., optics degradation 512) have physically plausible predecessors-and may refine traversal until a coherent path terminating at a corrective action is identified. In this context, a completeness criterion defines whether a causal path extends from the observed condition node through intermediate causal entities to a terminal node representing a physically actionable cause or corrective operation. In some embodiments, a causal path may be considered incomplete when it terminates at an intermediate phenomenon without reaching a recognized failure mechanism, lacks a corresponding remedy or mitigation node, or includes unresolved branches with confidence values below a defined threshold. When such an incomplete path is detected, the reasoning engine 440 may refine traversal by expanding the search depth, exploring alternative relation types, or querying adjacent subgraphs until a coherent, fully connected path terminating at a validated root-cause or corrective-action node is obtained. Logical-consistency evaluation ensures that intermediate nodes (for example, optics degradation 512) have physically plausible predecessors and do not conflict with process-domain constraints encoded in the graph schema. The resulting output 444 can include the predicted root cause, a ranked list of probable causes, a visual causal subgraph illustrating the reasoning path (e.g., visual graph including nodes and relations along the first causal path 551 or the second causal path), or recommended corrective or preventive actions, such as calibration, lens cleaning, air-filtration inspection, airflow recalibration, or illumination adjustment. While the example of Figure 5B shows the causal path with the root cause, it does not show a remedy action, but in some embodiments, the KG 424 may also include remedy actions and the reasoning engine 440 may include one or more remedy actions in the output 444. The output 444 may also be transmitted to a factory control system or manufacturing-execution system to automatically adjust parameters of the implicated process tool, such as recalibrating illumination, cleaning optics, or scheduling maintenance.

As described, the reasoning engine 440 traverses multiple connected relations in the KG 424 to construct one or more multi-hop causal paths linking the observed condition to candidate root causes or corrective actions. In some embodiments, the traversal may employ algorithms such as depth-limited search, path-ranking based on confidence scores, or probabilistic inference combining historical frequency and contextual similarity. The reasoning engine 440 may use graph-traversal algorithms, Bayesian inference, or reinforcement learning, optionally guided by LLM-based reasoning.

In some embodiments, the knowledge builder engine 445 autonomously maintains and evolves the KG 424 to ensure that causal relations among process entities reflect the current operational behavior of the semiconductor fabrication environment. The knowledge builder engine 445 receives process data 422, which may include new metrology datasets, inline measurement results, sensor logs, equipment-state traces, maintenance reports, and operator annotations generated during routine or corrective operations. The incoming data may be structured (e.g., numerical measurements or parameter logs) or unstructured (e.g., text-based service notes or failure reports). The knowledge builder engine 445 continuously monitors such data streams to detect trigger conditions that prompt modification of the KG 424. Example trigger conditions include receipt of new condition data 402 from a process tool, new condition 412 from a user, confirmation or rejection of a causal path previously inferred by the reasoning engine 440, confirmation or rejection of a causal path presented in the output 444, or detection of a statistically significant new correlation or anomaly pattern in recent process data 422.

Upon detecting a trigger condition, the knowledge builder engine 445 performs automated entity and relation extraction to identify process parameters, tool components, and observed effects mentioned or implied in the new data. For unstructured textual sources, the knowledge builder engine 445 may employ LLM-based extractors to identify noun and verb phrases representing entities and causal connectors (e.g., "focus drift caused by air-flow imbalance"). For structured or numerical inputs, the knowledge builder engine 445 may use statistical correlation, temporal alignment, or feature-similarity analysis to infer likely relationships (e.g., strong correlation between stage-temperature excursions and overlay error vectors). Each extracted entity is converted into a graph node, and each inferred dependency or correlation is represented as a directed edge in the KG 424. The knowledge builder engine 445 assigns an initial confidence weight to each edge based on source reliability, number of supporting instances, and cross-confirmation from multiple modalities.

In some embodiments, the knowledge builder engine 445 operates concurrently with the multimodal reasoning engine 440. While the reasoning engine 440 performs graph traversal to diagnose current conditions, the knowledge builder engine 445 may simultaneously expand or revise other portions of the KG 424 based on newly available information. To prevent conflicts, the knowledge builder engine 445 may use version control or graph-locking mechanisms to apply updates asynchronously and merge them after reasoning queries complete. This concurrent operation enables real-time reasoning on a continuously evolving knowledge base, ensuring that diagnostic and predictive inferences always use the latest causal information.

When a reasoning result (e.g., output 444) produced by the reasoning engine 440 is subsequently confirmed or corrected by an operator or automated verification step, the knowledge builder engine 445 reinforces or revises the corresponding relation in the KG 424. For example, confirmation of a predicted "focus non-uniformity → air-control cabinet" relation may increase the weight of that edge, whereas operator rejection of that inference may decrease or remove it. Similarly, the knowledge builder engine 445 can automatically incorporate new causal relations derived from repeated co-occurrence of data patterns, such as the repeated observation that illumination-telemetry fluctuations precede focus-map deviations, thereby enriching the KG 424 with emergent causal chains that were not manually defined.

Over time, the continuous autonomous updating performed by the knowledge builder engine 445 produces a self-evolving KG 424 that captures both expert-curated and data-derived causal knowledge. This capability allows the overall system to adapt dynamically to process drifts, equipment upgrades, and new fault mechanisms without human reprogramming. The same architecture supports predictive maintenance by enabling early recognition of repeating precursor patterns and updating causal relationships to reflect changing fab conditions.

While the system 400 is configured to diagnose error conditions based on data from completed process runs, its continuous ingestion of the condition data 402 or process data 422, and autonomous updating of the KG 424 enable recognition of precursor patterns that indicate emerging faults or gradual performance degradation. As the knowledge builder engine 445 incorporates new measurements, correlations, and confirmed causal relations, the multimodal reasoning engine 440 can compare current condition data against historical trajectories stored in the vector database 430 and identify combinations of sensor trends, wafer-map signatures, or environmental drifts that previously preceded specific failures. For example, a subtle but consistent increase in slit-illumination nonuniformity values, combined with a slow rise in air-cabinet particle counts, may match precursor conditions that historically led to the focus-uniformity error 500 described in Figure 5B. When such a partial match is detected, the reasoning engine 440 can infer that the same causal chain - "poor air-control cabinet" 528 → "dust on illumination gradient" 524 → "contamination in optical path" 522 → "focus-uniformity error" 502 - is likely in its early stages, even if wafer-level focus variation has not yet exceeded tolerance limits.

Based on this inference, the system 400 can generate a predictive-maintenance recommendation or automatically trigger a preventive action such as scheduling air-filter replacement, cleaning illumination optics, or recalibrating slit-illumination uniformity before the error condition fully manifests. Accordingly, the system 400 may recognize precursor patterns derived from continuously updated process data and initiate predictive-maintenance actions that correct or mitigate the corresponding root cause before the occurrence or recurrence of the associated error condition. Each preventive action and its outcome are then recorded as process data 422 and fed back to the knowledge builder engine 445, allowing the KG 424 to reinforce relations that correctly predicted a developing fault and to refine thresholds that distinguish precursor behavior from normal variation. Through this closed feedback loop, the system evolves from a reactive diagnostic tool into a self-learning predictive-maintenance framework capable of anticipating tool failures or process drifts across lithography, etch, deposition, or other manufacturing stages, allowing early intervention, reduced downtime, and more stable semiconductor manufacturing performance.

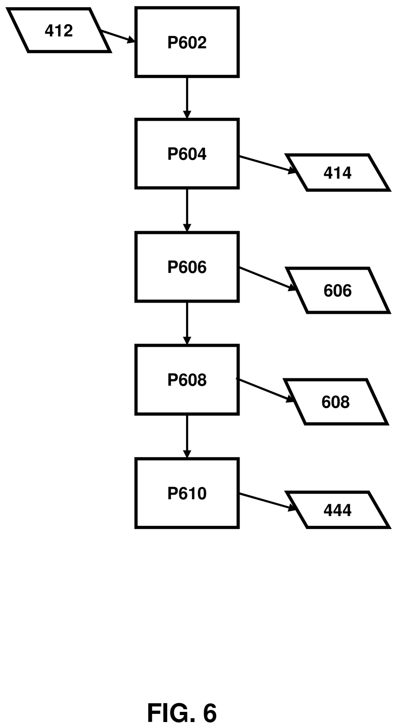

Figure 6 is a flow diagram of a method for error diagnosis using a multi-modal reasoning engine, consistent with various embodiments. In some embodiments, the method may be implemented using the system 400 of Figure 4 above. Each step may be implemented by one or more hardware processors executing the functions of the encoding model 425, retrieval engine 435, vector database 430, knowledge graph 424, and reasoning engine 440 described earlier.

At block P602, the encoding model 425 receives data representing a condition associated with a semiconductor manufacturing process, a process tool, or a wafer processed by the process tool. The received data, referred to as input condition data 412, may be provided by a user, or acquired directly from one or more process tools or from a manufacturing execution system aggregating fab data. As discussed at least with reference to Figure 4, such condition data may include images, numerical measurement maps, sensor traces or raw numerical signals, and process logs or textual records. Examples include focus maps or overlay maps generated by lithography scanners, temperature and vibration traces from etch or deposition tools, or tool event logs indicating abnormal calibration states. Each of these data types represents a measurable or inferred condition (e.g., error), such as optical-focus variation, overlay drift, or environmental instability, as above at least with reference to Figure 4. The input condition data 412 may be collected in real time or retrieved from stored process datasets. In some embodiments, pre-processing may normalize data dimensions or scale measurement units, but the content of the input condition data 412 remains representative of the physical process or tool state at the time of acquisition.

At block P604, the encoding model 425 encodes the input condition data 412 into a numerical vector representation 414. The encoding model 425 may be a neural encoder trained to extract spatial, temporal, or statistical features from multimodal data and to map those features into a common multidimensional encoding space. As described earlier, different encoder architectures may be used for different input modalities.

The resulting vector representation 414 captures latent relationships among parameters embedded within the input condition data 412. By expressing heterogeneous data in a shared numerical space, the system 400 can compare wafer images, measurement maps, and sensor traces using a unified similarity metric. The vector representation 414 is then passed to the retrieval engine 435 for comparison against previously indexed vectors representing past process and equipment conditions.

At block P606, the retrieval engine 435 searches a vector database 430 containing the stored vector representations 404 that correspond to previously observed process conditions to identify vector representations that are similar to or match with the input vector representation 414. Each stored vector representation 404 is linked to metadata describing the associated process context, such as tool identifier, process parameters, wafer lot number, and confirmed error classification. The retrieval engine 435 determines the similarity between the input vector representation 414 and each stored vector representation 404 using distance metrics such as Euclidean distance or cosine similarity within the encoding space.

Vectors having similarity values above a threshold or belonging to the top-K most similar entries are identified as relevant matches. In some implementations, multiple retrieval criteria, such as numeric similarity, process-step filtering, or tool matching, may be combined through ensemble ranking to produce a refined set of similar cases. The retrieval results 606 include both the retrieved vectors and their associated metadata, collectively providing contextual information describing historical conditions that resemble the current observation (e.g., condition associated with the input condition data 412). This aggregated metadata is then provided to the multimodal reasoning engine 440 for causal analysis.

At block P608, the multimodal reasoning engine 440 accesses a knowledge graph 424 that defines causal relations among process entities, tool components, and environmental factors. The reasoning engine 440 formulates one or more context-aware queries 608 to the KG 424 using both the metadata obtained from the retrieval engine 435 and the structural context of the graph itself, as previously explained. The queries 608 identify graph nodes and relations most relevant to the current condition, such as nodes representing focus errors, illumination non-uniformity, or air-control anomalies, and initiate traversal of connected relations representing causal or correlative dependencies.

Through this traversal, the reasoning engine 440 determines one or more multi-hop causal paths that connect the observed condition to probable underlying causes and possible corrective actions. For example, in the case of a focus-uniformity error 500 (as illustrated in Figure 5B), the reasoning engine 440 may identify causal paths such as the second causal path 552 - "poor air-control cabinet" 528 → "dust on rema lens" 526 → "contamination in optical path 522" → "focus-uniformity error" 502, or the first causal path 551 - "poor air-control cabinet" 528 → "slit illumination non-uniformity" 518 → "optics degradation or misalignment" 512 → "focus-uniformity error 502." Each path is evaluated for completeness, logical consistency, and confidence score based on relation weights in the KG 424 and the presence of corroborating evidence in the retrieved metadata.

In some embodiments, if traversal results are incomplete or ambiguous, the reasoning engine 440 may reformulate the query dynamically, e.g., by expanding traversal depth, incorporating correlated domains, or invoking a large-language-model-based reasoning step, to refine the inference. The reasoning engine 440 can output not only the ranked list of causal paths but also a visual subgraph illustrating the relations among nodes, thereby enhancing transparency and explainability.

At block P610, the reasoning engine 440 generates an output 444 that encapsulates the diagnostic output of the reasoning process. The output 444 may include at least one of a ranked list of probable causes, one or more recommended corrective or preventive actions, or an explainable subgraph visually depicting the multi-hop causal chain leading from root cause to observed condition or a remedy action. The output 444 may be presented to a user through a graphical user interface, transmitted to a manufacturing execution system, or supplied as a control signal to the process tool for automated adjustment of operating parameters.

In addition to providing immediate diagnosis, the output 444 and its subsequent validation by operators or downstream process feedback are fed back to the knowledge builder engine 445 as part of the autonomous updating mechanism described earlier. Confirmation of the reasoning result reinforces the corresponding edges in the KG 424, while rejection of an incorrect inference triggers modification or removal of weak relations. Over time, this feedback loop allows the system to continuously refine the causal accuracy of the knowledge graph and to transition from reactive diagnosis to predictive maintenance, wherein precursor patterns are recognized and corrective actions are initiated before an error condition fully manifests.

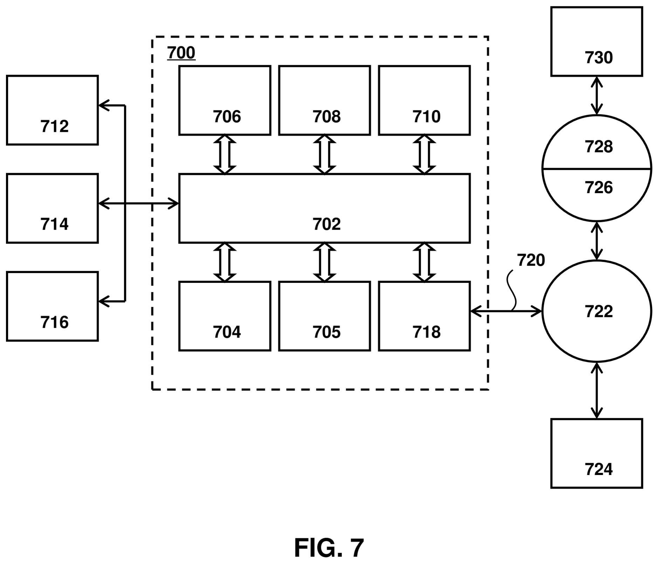

Figure 7 is a block diagram that illustrates a computer system 700 which can assist in implementing the systems and methods disclosed herein. Computer system 700 includes a bus 702 or other communication mechanism for communicating information, and a processor 704 (or multiple processors 704 and 705) coupled with bus 702 for processing information. Computer system 700 also includes a main memory 706, such as a random-access memory (RAM) or other dynamic storage device, coupled to bus 702 for storing information and instructions to be executed by processor 704. Main memory 706 also may be used for storing temporary variables or other intermediate information during execution of instructions to be executed by processor 704. Computer system 700 further includes a read only memory (ROM) 708 or other static storage device coupled to bus 702 for storing static information and instructions for processor 704. A storage device 710, such as a magnetic disk or optical disk, is provided and coupled to bus 702 for storing information and instructions.

Computer system 700 may be coupled via bus 702 to a display 712, such as a cathode ray tube (CRT) or flat panel or touch panel display for displaying information to a computer user. An input device 714, including alphanumeric and other keys, is coupled to bus 702 for communicating information and command selections to processor 704. Another type of user input device is cursor control 716, such as a mouse, a trackball, or cursor direction keys for communicating direction information and command selections to processor 704 and for controlling cursor movement on display 712. This input device typically has two degrees of freedom in two axes, a first axis (e.g., x) and a second axis (e.g., y), that allows the device to specify positions in a plane. A touch panel (screen) display may also be used as an input device.

According to one embodiment, portions of the optimization process may be performed by computer system 700 in response to processor 704 executing one or more sequences of one or more instructions contained in main memory 706. Such instructions may be read into main memory 706 from another computer-readable medium, such as storage device 710. Execution of the sequences of instructions contained in main memory 706 causes processor 704 to perform the process steps described herein. One or more processors in a multi-processing arrangement may also be employed to execute the sequences of instructions contained in main memory 706. In an alternative embodiment, hard-wired circuitry may be used in place of or in combination with software instructions. Thus, the description herein is not limited to any specific combination of hardware circuitry and software.

The term "computer-readable medium" as used herein refers to any medium that participates in providing instructions to processor 704 for execution. Such a medium may take many forms, including but not limited to, non-volatile media, volatile media, and transmission media. Non-volatile media include, for example, optical or magnetic disks, such as storage device 710. Volatile media include dynamic memory, such as main memory 706. Transmission media include coaxial cables, copper wire and fiber optics, including the wires that comprise bus 702. Transmission media can also take the form of acoustic or light waves, such as those generated during radio frequency (RF) and infrared (IR) data communications. Common forms of computer-readable media include, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 704 for execution. For example, the instructions may initially be borne on a magnetic disk of a remote computer. The remote computer can load the instructions into its dynamic memory and send the instructions over a telephone line using a modem. A modem local to computer system 700 can receive the data on the telephone line and use an infrared transmitter to convert the data to an infrared signal. An infrared detector coupled to bus 702 can receive the data carried in the infrared signal and place the data on bus 702. Bus 702 carries the data to main memory 706, from which processor 704 retrieves and executes the instructions. The instructions received by main memory 706 may optionally be stored on storage device 710 either before or after execution by processor 704.

Computer system 700 also preferably includes a communication interface 718 coupled to bus 702. Communication interface 718 provides a two-way data communication coupling to a network link 720 that is connected to a local network 722. For example, communication interface 718 may be an integrated services digital network (ISDN) card or a modem to provide a data communication connection to a corresponding type of telephone line. As another example, communication interface 718 may be a local area network (LAN) card to provide a data communication connection to a compatible LAN. Wireless links may also be implemented. In any such implementation, communication interface 718 sends and receives electrical, electromagnetic, or optical signals that carry digital data streams representing various types of information.

Network link 720 typically provides data communication through one or more networks to other data devices. For example, network link 720 may provide a connection through local network 722 to a host computer 724 or to data equipment operated by an Internet Service Provider (ISP) 726. ISP 726 in turn provides data communication services through the worldwide packet data communication network, now commonly referred to as the "Internet" 728. Local network 722 and Internet 728 both use electrical, electromagnetic, or optical signals that carry digital data streams. The signals through the various networks and the signals on network link 720 and through communication interface 718, which carry the digital data to and from computer system 700, are exemplary forms of carrier waves transporting the information.

Computer system 700 can send messages and receive data, including program code, through the network(s), network link 720, and communication interface 718. In the Internet example, a server 730 might transmit a requested code for an application program through Internet 728, ISP 726, local network 722 and communication interface 718. One such downloaded application may provide for the illumination optimization of the embodiment, for example. The received code may be executed by processor 704 as it is received, and/or stored in storage device 710, or other non-volatile storage for later execution. In this manner, computer system 700 may obtain application code in the form of a carrier wave.

While the concepts disclosed herein may be used for imaging on a substrate such as a silicon wafer, it shall be understood that the disclosed concepts may be used with any type of lithographic imaging systems, e.g., those used for imaging on substrates other than silicon wafers.

The terms "optimizing" and "optimization" as used herein refers to or means adjusting a patterning apparatus (e.g., a lithography apparatus), a patterning process, etc. such that results and/or processes have more desirable characteristics, such as higher accuracy of projection of a design pattern on a substrate, a larger process window, etc. Thus, the term "optimizing" and "optimization" as used herein refers to or means a process that identifies one or more values for one or more parameters that provide an improvement, e.g., a local optimum, in at least one relevant metric, compared to an initial set of one or more values for those one or more parameters. "Optimum" and other related terms should be construed accordingly. In an embodiment, optimization steps can be applied iteratively to provide further improvements in one or more metrics.

Aspects of the invention can be implemented in any convenient form. For example, an embodiment may be implemented by one or more appropriate computer programs which may be carried on an appropriate carrier medium which may be a tangible carrier medium (e.g., a disk) or an intangible carrier medium (e.g., a communications signal). Embodiments of the invention may be implemented using suitable apparatus which may specifically take the form of a programmable computer running a computer program arranged to implement a method as described herein. Thus, embodiments of the disclosure may be implemented in hardware, firmware, software, or any combination thereof. Embodiments of the disclosure may also be implemented as instructions stored on a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic disk storage media; optical storage media; flash memory devices; electrical, optical, acoustical, or other forms of propagated signals (e.g., carrier waves, infrared signals, digital signals, etc.), and others. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc.

In block diagrams, illustrated components are depicted as discrete functional blocks, but embodiments are not limited to systems in which the functionality described herein is organized as illustrated. The functionality provided by each of the components may be provided by software or hardware modules that are differently organized than is presently depicted, for example such software or hardware may be intermingled, conjoined, replicated, broken up, distributed (e.g., within a data center or geographically), or otherwise differently organized. The functionality described herein may be provided by one or more processors of one or more computers executing code stored on a tangible, non-transitory, machine readable medium. In some cases, third party content delivery networks may host some or all of the information conveyed over networks, in which case, to the extent information (e.g., content) is said to be supplied or otherwise provided, the information may be provided by sending instructions to retrieve that information from a content delivery network.

Unless specifically stated otherwise, as apparent from the discussion, it is appreciated that throughout this specification discussions utilizing terms such as "processing," "computing," "calculating," "determining" or the like refer to actions or processes of a specific apparatus, such as a special purpose computer or a similar special purpose electronic processing/computing device.

Embodiments of the present disclosure can be further described by the following clauses.
1. A method comprising:
   receiving data associated with a condition of a semiconductor manufacturing process, a process tool or a wafer processed by the process tool using the process, the data including at least one of an image or a set of raw measurement signals;
   encoding the data into a numerical vector representation;
   searching a vector database having vector representations respectively linked to metadata describing prior conditions to identify one or more stored vector representations similar to the numerical vector representation;
   providing the metadata linked to the identified stored vector representations to a reasoning engine that accesses a knowledge graph defining causal relations among process entities; and
   generating, based on traversal of multiple relations in the knowledge graph using the metadata, a result having a causal path identifying a probable cause of the condition.
2. The method of clause 1, wherein generating the result includes:
   determining the causal path by identifying a sequence of connected nodes in the knowledge graph that link a node representing the condition to a node representing a corrective action or root cause.
3. The method of clause 1 further comprising:
   evaluating the causal path for at least one of logical consistency with the metadata or completeness of the causal path prior to generating the result.
4. The method of clause 1, wherein generating the result further includes:
   generating a visual subgraph of the knowledge graph representing the causal path.
5. The method of clause 4, wherein the visual subgraph includes nodes representing the condition, intermediate causal factors, and at least one node representing the probable cause.
6. The method of clause 1, wherein generating the result produces an output comprising the causal path, a classification of the condition, and a corrective action associated with the probable cause.
7. The method of clause 1, wherein the result includes a diagnostic output configured to control or adjust at least one operating parameter of the process tool based on the probable cause identified in the causal path.
8. The method of clause 1, wherein the knowledge graph comprises nodes representing at least one of a process module, a process parameter, a material property, a measurement target, or an error class, and edges representing causal relations therebetween.
9. The method of clause 1 further comprising:
   updating, by a knowledge builder engine, the knowledge graph by adding or modifying at least one node or relation in response to a trigger condition.
10. The method of clause 9, wherein the trigger condition includes receipt of a user confirmation or correction of the result, wherein the updating includes reinforcing a causal relation corresponding to a confirmed result or revising the causal relation corresponding to a rejected result.
11. The method of clause 9, wherein the trigger condition includes receipt of the data representing the condition at the knowledge builder engine.
12. The method of clause 11, wherein the data is received at the knowledge builder engine from the process tool.
13. The method of clause 9, wherein updating the knowledge graph includes:
   extracting one or more causal relations from process data and inserting or updating corresponding nodes or edges into the knowledge graph.
14. The method of clause 9, wherein the reasoning engine accesses the knowledge graph concurrently with updates by the knowledge builder engine to enable real-time reasoning based on newly added entities or relations.
15. The method of clause 9, wherein the knowledge builder engine and the reasoning engine are implemented as separate instances of a common language-based model operating in different modes.
16. The method of clause 1, wherein the reasoning engine refines traversal of the knowledge graph when the causal path determined from the traversal does not satisfy a completeness criterion.
17. The method of clause 1, wherein the data further includes at least one of a process log, a sensor trace, metrology data, or a numerical measurement map representing a parameter of the wafer.
18. The method of clause 1, wherein the vector representations in the vector database each have metadata comprising at least one of a process parameter, a tool identifier, a process step name, or a previously confirmed error classification.
19. The method of clause 1, wherein encoding the data into the numerical vector representation includes:
   transforming at least two different types of input data selected from images, maps, numerical measurement sets, and textual or categorical information into respective numerical vectors located within a common encoding space, the vector representations representing semantically or physically related conditions being positioned closer to one another within the common encoding space.
20. The method of clause 19, wherein searching the vector database includes:
   identifying stored vector representations located within a defined proximity of the numerical vector representation in the common encoding space, the defined proximity corresponding to similarity of underlying conditions represented by the respective data from which the vector representations were derived.
21. The method of clause 20 further comprising:
   associating the metadata linked to the identified stored vector representations with the condition represented by the received data prior to providing the metadata to the reasoning engine.
22. The method of clause 1, wherein encoding the data into the numerical vector representation includes:
   extracting latent spatial or statistical characteristics from the data that collectively define the condition and representing said characteristics as numerical components of the vector representation.
23. The method of clause 1, wherein providing the metadata to the reasoning engine includes:
   aggregating metadata from the identified stored vector representations to determine a consensus condition label used as input to the reasoning engine.
24. The method of clause 1, wherein the vector database and the knowledge graph are stored in a common data management system such that the metadata linked to the identified stored vector representations is accessible to the reasoning engine without intermediate conversion.
25. The method of clause 1, wherein the process tool comprises at least one of a lithography tool, a metrology tool, an inspection tool, a deposition tool, a chemical-mechanical planarization tool, an etch tool, or a mask writing tool.
26. The method of clause 1, wherein the condition includes at least one of a measured or inferred parameter, performance deviation, an error classification, or an operational state indicative of tool performance, process stability, or wafer quality.
27. A method for determining a cause of an error condition in a semiconductor manufacturing system, comprising:
   receiving data representing an error condition associated with a semiconductor manufacturing process, a process tool, or a wafer processed by the process tool using the process, the data including at least one of an image, a numerical measurement map, or a sensor signal;
   encoding the data into a numerical vector representation characterizing spatial or statistical features of the error condition;
   searching a vector database storing vector representations respectively linked to metadata describing previously identified error conditions to identify vector representations similar to the numerical vector representation;
   providing metadata linked to the identified stored vector representations to a reasoning engine that accesses a knowledge graph defining causal relations among process modules, tool parameters, materials, and failure classes; and
   determining, based on traversal of a plurality of causally connected nodes in the knowledge graph, a multi-hop causal path extending from a node representing the error condition through one or more intermediate causal factors to at least one node representing a root cause or corrective action.
28. The method of clause 27, wherein determining the multi-hop causal path includes:
   identifying a sequence of connected nodes in the knowledge graph that link a node representing the error condition to a node representing a probable root cause, a failure mechanism, or a corrective action associated therewith.
29. The method of clause 27 further comprising:
   evaluating the multi-hop causal path for at least one of logical consistency with the metadata or completeness of the multi-hop causal path prior to determining the cause.
30. The method of clause 27, wherein determining the multi-hop causal path includes:
   generating a visual subgraph of the knowledge graph representing the multi-hop causal path including nodes corresponding to the error condition, intermediate causal factors, and the root cause.
31. The method of clause 27, wherein the multi-hop causal path produces a diagnostic output configured to adjust at least one operating parameter of the process tool to mitigate recurrence of the error condition.
32. The method of clause 27, wherein the knowledge graph comprises nodes representing at least one of a process module, a process parameter, a material property, a measurement target, or a failure class, and edges representing causal relations therebetween.
33. The method of clause 27 further comprising:
   updating, by a knowledge builder engine, the knowledge graph by adding or modifying at least one node or relation in response to a trigger condition.
34. The method of clause 33, wherein the trigger condition includes receipt of user confirmation or rejection of a previously determined cause, and wherein the updating includes reinforcing a causal relation corresponding to a confirmed result or revising the causal relation corresponding to a rejected result.
35. The method of clause 33, wherein the trigger condition includes receipt of new process data representing a subsequently measured condition of the process tool, and wherein the knowledge builder engine extracts one or more causal relations from the new process data and inserts or updates corresponding nodes or edges into the knowledge graph.
36. The method of clause 33, wherein the knowledge builder engine and the reasoning engine are implemented as separate instances of a common language-based model operating in different modes, the knowledge builder engine configured for knowledge extraction and the reasoning engine configured for causal reasoning.
37. The method of clause 27, wherein encoding the data into the numerical vector representation includes:
   transforming at least two different types of input data selected from images, numerical measurement maps, sensor signals, and textual or categorical information into respective numerical vectors located within a common encoding space, the vector representations representing semantically or physically related error conditions being positioned proximate to one another within the common encoding space.
38. The method of clause 37, wherein searching the vector database includes identifying stored vector representations located within a defined proximity of the numerical vector representation in the common encoding space, the defined proximity corresponding to similarity of underlying error conditions represented by the respective data.
39. The method of clause 27, wherein the metadata linked to the identified stored vector representations comprises at least one of a process parameter, a tool identifier, a process step name, a previously confirmed error classification, or a corrective action applied in response to the stored condition.
40. The method of clause 27, wherein the process tool comprises at least one of a lithography tool, a metrology tool, an inspection tool, a deposition tool, a chemical-mechanical planarization tool, an etch tool, or a mask writing tool.
41. The method of clause 27 further comprising:
   recognizing, based on autonomous updating of the knowledge graph, precursor patterns corresponding to the error condition prior to occurrence of the error condition, and
   initiating a predictive-maintenance action to mitigate the corresponding root cause prior to occurrence of the error condition.
42. An apparatus, the apparatus comprising:
   a memory storing a set of instructions; and
   a processor configured to execute the set of instructions to cause the apparatus to perform a method of any of the above clauses.
43. A non-transitory computer-readable medium having instructions recorded thereon, the instructions when executed by a computer implementing the method of any of the above clauses.

The reader should appreciate that the present application describes several inventions. Rather than separating those inventions into multiple isolated patent applications, these inventions have been grouped into a single document because their related subject matter lends itself to economies in the application process. But the distinct advantages and aspects of such inventions should not be conflated. In some cases, embodiments address all of the deficiencies noted herein, but it should be understood that the inventions are independently useful, and some embodiments address only a subset of such problems or offer other, unmentioned benefits that will be apparent to those of skill in the art reviewing the present disclosure. Due to costs constraints, some inventions disclosed herein may not be presently claimed and may be claimed in later filings, such as continuation applications or by amending the present claims. Similarly, due to space constraints, neither the Abstract nor the Summary sections of the present document should be taken as containing a comprehensive listing of all such inventions or all aspects of such inventions.

It should be understood that the description and the drawings are not intended to limit the present disclosure to the particular form disclosed, but to the contrary, the intention is to cover all modifications, equivalents, and alternatives falling within the spirit and scope of the inventions as defined by the appended claims.

Modifications and alternative embodiments of various aspects of the inventions will be apparent to those skilled in the art in view of this description. Accordingly, this description and the drawings are to be construed as illustrative only and are for the purpose of teaching those skilled in the art the general manner of carrying out the inventions. It is to be understood that the forms of the inventions shown and described herein are to be taken as examples of embodiments. Elements and materials may be substituted for those illustrated and described herein, parts and processes may be reversed or omitted, certain features may be utilized independently, and embodiments or features of embodiments may be combined, all as would be apparent to one skilled in the art after having the benefit of this description. Changes may be made in the elements described herein without departing from the spirit and scope of the invention as described in the following claims. Headings used herein are for organizational purposes only and are not meant to be used to limit the scope of the description.

As used throughout this application, the word "may" is used in a permissive sense (i.e., meaning having the potential to), rather than the mandatory sense (i.e., meaning must). The words "include", "including", and "includes" and the like mean including, but not limited to. As used throughout this application, the singular forms "a," "an," and "the" include plural referents unless the content explicitly indicates otherwise. Thus, for example, reference to "an" element or "a" element includes a combination of two or more elements, notwithstanding use of other terms and phrases for one or more elements, such as "one or more." As used herein, unless specifically stated otherwise, the term "or" encompasses all possible combinations, except where infeasible. For example, if it is stated that a component may include A or B, then, unless specifically stated otherwise or infeasible, the component may include A, or B, or A and B. As a second example, if it is stated that a component may include A, B, or C, then, unless specifically stated otherwise or infeasible, the component may include A, or B, or C, or A and B, or A and C, or B and C, or A and B and C.

Terms describing conditional relationships, e.g., "in response to X, Y," "upon X, Y,", "if X, Y," "when X, Y," and the like, encompass causal relationships in which the antecedent is a necessary causal condition, the antecedent is a sufficient causal condition, or the antecedent is a contributory causal condition of the consequent, e.g., "state X occurs upon condition Y obtaining" is generic to "X occurs solely upon Y" and "X occurs upon Y and Z." Such conditional relationships are not limited to consequences that instantly follow the antecedent obtaining, as some consequences may be delayed, and in conditional statements, antecedents are connected to their consequents, e.g., the antecedent is relevant to the likelihood of the consequent occurring. Statements in which a plurality of attributes or functions are mapped to a plurality of objects (e.g., one or more processors performing steps A, B, C, and D) encompasses both all such attributes or functions being mapped to all such objects and subsets of the attributes or functions being mapped to subsets of the attributes or functions (e.g., both all processors each performing steps A-D, and a case in which processor 1 performs step A, processor 2 performs step B and part of step C, and processor 3 performs part of step C and step D), unless otherwise indicated. Further, unless otherwise indicated, statements that one value or action is "based on" another condition or value encompass both instances in which the condition or value is the sole factor and instances in which the condition or value is one factor among a plurality of factors. Unless otherwise indicated, statements that "each" instance of some collection have some property should not be read to exclude cases where some otherwise identical or similar members of a larger collection do not have the property, i.e., each does not necessarily mean each and every. References to selection from a range includes the end points of the range.

In the above description, any processes, descriptions or blocks in flowcharts should be understood as representing modules, segments or portions of code which include one or more executable instructions for implementing specific logical functions or steps in the process, and alternate implementations are included within the scope of the exemplary embodiments of the present advancements in which functions can be executed out of order from that shown or discussed, including substantially concurrently or in reverse order, depending upon the functionality involved, as would be understood by those skilled in the art.

To the extent certain U.S. patents, U.S. patent applications, or other materials (e.g., articles) have been incorporated by reference, the text of such U.S. patents, U.S. patent applications, and other materials is only incorporated by reference to the extent that no conflict exists between such material and the statements and drawings set forth herein. In the event of such conflict, any such conflicting text in such incorporated by reference U.S. patents, U.S. patent applications, and other materials is specifically not incorporated by reference herein.

While certain embodiments have been described, these embodiments have been presented by way of example only, and are not intended to limit the scope of the present disclosures. Indeed, the novel methods, apparatuses and systems described herein can be embodied in a variety of other forms; furthermore, various omissions, substitutions, and changes in the form of the methods, apparatuses and systems described herein can be made without departing from the spirit of the present disclosures. The accompanying claims and their equivalents are intended to cover such forms or modifications as would fall within the scope and spirit of the present disclosures.

## Claims

1. A method comprising:
receiving data associated with a condition of a semiconductor manufacturing process, a process tool or a wafer processed by the process tool using the process, the data including at least one of an image or a set of raw measurement signals;
encoding the data into a numerical vector representation;
searching a vector database having vector representations respectively linked to metadata describing prior conditions to identify one or more stored vector representations similar to the numerical vector representation;
providing the metadata linked to the identified stored vector representations to a reasoning engine that accesses a knowledge graph defining causal relations among process entities; and
generating, based on traversal of multiple relations in the knowledge graph using the metadata, a result having a causal path identifying a probable cause of the condition.

2. The method of claim 1, wherein generating the result includes:
determining the causal path by identifying a sequence of connected nodes in the knowledge graph that link a node representing the condition to a node representing a corrective action or root cause; and evaluating the causal path for at least one of logical consistency with the metadata or completeness of the causal path prior to generating the result.

3. The method of claim 1, wherein generating the result further includes:
generating a visual subgraph of the knowledge graph representing the causal path, wherein the visual subgraph includes nodes representing the condition, intermediate causal factors, and at least one node representing the probable cause, and wherein the output comprises the causal path, a classification of the condition, and a corrective action associated with the probable cause.

4. The method of claim 1, wherein the result includes a diagnostic output configured to control or adjust at least one operating parameter of the process tool based on the probable cause identified in the causal path.

5. The method of claim 1, wherein the knowledge graph comprises nodes representing at least one of a process module, a process parameter, a material property, a measurement target, or an error class, and edges representing causal relations therebetween.

6. The method of claim 1 further comprising:
updating, by a knowledge builder engine, the knowledge graph by adding or modifying at least one node or relation in response to a trigger condition, wherein the trigger condition includes receipt of a user confirmation or correction of the result or receipt of the data representing the condition at the knowledge builder engine, and wherein the updating includes reinforcing a causal relation corresponding to a confirmed result or revising the causal relation corresponding to a rejected result, and wherein the data is received at the knowledge builder engine from the process tool.

7. The method of claim 6, wherein updating the knowledge graph includes:
extracting one or more causal relations from process data and inserting or updating corresponding nodes or edges into the knowledge graph.

8. The method of claim 6, wherein the reasoning engine accesses the knowledge graph concurrently with updates by the knowledge builder engine to enable real-time reasoning based on newly added entities or relations, and wherein the knowledge builder engine and the reasoning engine are implemented as separate instances of a common language-based model operating in different modes.

9. The method of claim 1, wherein the reasoning engine refines traversal of the knowledge graph when the causal path determined from the traversal does not satisfy a completeness criterion.

10. The method of claim 1, wherein the vector representations in the vector database each have metadata comprising at least one of a process parameter, a tool identifier, a process step name, or a previously confirmed error classification.

11. The method of claim 1, wherein encoding the data into the numerical vector representation includes:
transforming at least two different types of input data selected from images, maps, numerical measurement sets, and textual or categorical information into respective numerical vectors located within a common encoding space, the vector representations representing semantically or physically related conditions being positioned closer to one another within the common encoding space, and wherein searching the vector database includes:
identifying stored vector representations located within a defined proximity of the numerical vector representation in the common encoding space, the defined proximity corresponding to similarity of underlying conditions represented by the respective data from which the vector representations were derived.

12. The method of claim 11 further comprising:
associating the metadata linked to the identified stored vector representations with the condition represented by the received data prior to providing the metadata to the reasoning engine, and wherein providing the metadata to the reasoning engine includes:
aggregating metadata from the identified stored vector representations to determine a consensus condition label used as input to the reasoning engine.

13. The method of claim 1, wherein encoding the data into the numerical vector representation includes:
extracting latent spatial or statistical characteristics from the data that collectively define the condition and representing said characteristics as numerical components of the vector representation.

14. The method of claim 1, wherein the vector database and the knowledge graph are stored in a common data management system such that the metadata linked to the identified stored vector representations is accessible to the reasoning engine without intermediate conversion.

15. The method of claim **1,** wherein the data further includes at least one of a process log, a sensor trace, metrology data, or a numerical measurement map representing a parameter of the wafer, and wherein the process tool comprises at least one of a lithography tool, a metrology tool, an inspection tool, a deposition tool, a chemical-mechanical planarization tool, an etch tool, or a mask writing tool, and wherein the condition includes at least one of a measured or inferred parameter, performance deviation, an error classification, or an operational state indicative of tool performance, process stability, or wafer quality.
